# EUROPEAN PATENT SPECIFICATION

(11) **EP 2 360 050 B1**
(45) Date of publication and mention of the grant of the patent: **07.12.2016**
(21) Application number: 11001465.1
(22) Date of filing: 22.02.2011
(51) Int. Cl.: B60L 11/18, H01R 13/621, H02J 7/00

(54) **Power supply control device**
Stromversorgungssteuervorrichtung
Dispositif de contrôle d'alimentation

(30) Priority: 23.02.2010 JP 2010037913
(43) Date of publication of application: 24.08.2011
(73) Proprietor: Panasonic Intellectual Property Management Co., Ltd., Osaka 540-6207 (JP)
(72) Inventor: Nakamura, Shinichi, Tsu-Shi Mie 514-0101 (JP); Kakiuchi, Kouji, Tsu-Shi Mie 514-0101 (JP); Mukai, Tatsuya, Kadoma-shi (JP); Mori, Shiro, Kadoma-shi (JP); Fukuo, Naoki, Kadoma-shi (JP); Inagaki, Noboru, Kadoma-shi (JP); Mihara, Haruhiko, Kadoma-shi (JP)
(74) Representative: Samson & Partner Patentanwälte mbB

(56) References cited:
- JP-A- 2009 240 053
- US-A- 5 751 135
- US-A1- 2007 093 112
- US-A1- 2009 301 801

## Description

### Field of the Invention

The invention relates to a power supply control device.

### Background of the Invention

Conventionally, there is proposed a power supply control device for controlling power supply from a power source to a vehicle (see, e.g., Japanese Unexamined Patent Application Publication No. 2009-240053). As the above power source, for example, a commercial 100V AC power source is employed. Further, as the above vehicle, for example, a plug-in hybrid car and an electric vehicle are employed, which include a battery and a charge circuit for charging the battery, and use an electric motor driven by the battery power for traveling on. The power supply control device is used for supplying electric power to the charge circuit.

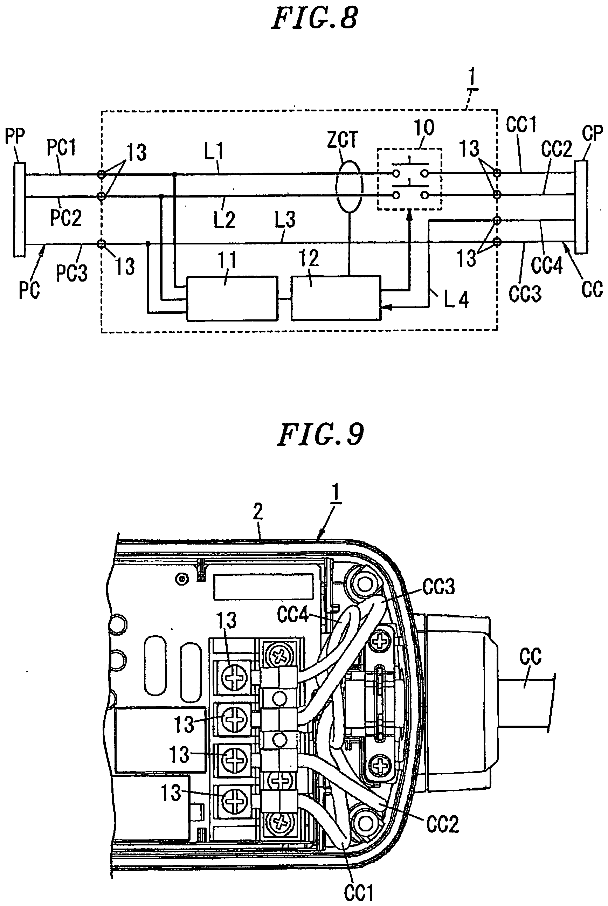

The power supply control device of this type, as shown in Fig. 8, includes: a vehicle side cable CC provided at one end thereof with a vehicle side plug CP connected to a charge circuit for a vehicle (not shown); a power-supply side cable PC provided at one end thereof with a power-source side plug PP connected to a power source (not shown); and a body block 1 connected to the charge circuit and the power source via the cables CC and PC respectively, the body block switching on and off the power supply to the charge circuit from the power source.

The power supply control device includes, between the power source and the vehicle, a conductive line L1 for a power electrode (hereinafter referred to as "a power side line"); a conductive line L2 for a grounding side electrode (hereinafter referred to as "a grounding side line"); and a conductive line L3 for a ground electrode (hereinafter referred to as "a ground line").

Further, the body block 1 includes a relay 10 provided in each of the power side line L1 and the grounding side line L2, which switches on and off the power supply to the charge circuit from the power source.

Furthermore, the vehicle has a control circuit (not shown) for controlling an ON/OFF operation of the relay 10. Wires CC1 to CC4, provided in the vehicle cable CC, includes a signal line CC4 serving as a wire electrically connected to the control circuit.

The body block 1 includes: a drive circuit 12 for switching on and off the relay 10 according to the electric signal that is transmitted from the control circuit via a conductive line L4 (referred to as "a signal line") connected to the signal line CC4 and separated from the respective conductive lines L1 to L3; and a power supply circuit 11 connected to each of the power side line L1, the grounding side line L2 and the ground line L3 between the power source and the relay 10 to generate the electric power for the drive circuit 12.

Further, the body block 1 includes a zero-phase current transformer ZCT, disposed closer to the power source than the relay 10, the power side line L1 and the grounding side line L2 passing through the zero-phase current transformer ZCT. The drive circuit 12 detects a leakage current based on an induced current induced in the zero-phase current transformer ZCT, and then turns off the relay 10 when the leakage current is detected. Thus, the zero-phase current transformer ZCT, the relay 10, the power supply circuit 11, and the drive circuit 12 constitute a power supply control circuit. Further, a first and a second terminal 13 of the power side line L1, to which a power wire PC1 in the power side cable PC and a power wire CC1 in the vehicle side cable PC are respectively connected, are electrically connected or disconnected by controlling an ON/OFF operation of the relay 10. Likewise, a third terminal 13 and a fourth terminal 13 of the grounding side line L2, to which a grounding wire PC2 in the power side cable PC and a grounding wire CC2 in the vehicle side cable CC are respectively connected, are electrically connected or disconnected by the relay 10. Since the relay 10, the power supply circuit 11, and the drive circuit 12 are well-known in the art, the detailed description thereof will be omitted.

Meanwhile, if any one of the wires PC1 to PC3 and CC1 to CC4 is broken or if the plug PP or CC is damaged, the broken or damaged cables PC and CC should be replaced. Further, in the case where the power side plug PP or the vehicle side plug CP need to be changed, such as the case where the power side plug PP is desired to be connected to a power receptacle of a different type, or the case where the vehicle side plug CP is desired to be connected to a vehicle side receptacle of a different type, the entire cable PC or CP should be replaced.

As shown in Fig. 9, however, in the conventional power supply control device, seven terminals 13, to which the wires PC1 to PC3 of the power side cable PC and the wires CC1 to CC4 of the vehicle side cable CC are respectively connected, are constituted by screw terminals that are accommodated in a housing 2 of the body block 1 (the wires PC1 to PC3 of the power side cable PC and the terminals corresponding thereto are not shown in Fig. 9). For that reason, when the cable PC or CC is replaced, the housing 2 is opened first, and then the wires PC1 to PC3 or CC1 to CC4 of the cable PC or CC to be replaced are removed, which results in poor maintenance.

Since the above power supply control devices are often used outdoors, the housing 2 typically requires to be waterproof. However, in order to ensure the waterproof performance, the housing 2 may be configured by using components coupled to each other with tapping screws. In this case, once the components are disassembled for opening the housing 2, the waterproof performance is difficult to be ensured even if the housing 2 is reassembled. Thus, in the case where such a waterproof means, of which the waterproof performance is damaged once the housing 2 is disassembled, is employed, or in the case where the housing 2 is reassembled inappropriately, the waterproof performance is deteriorated as compared with that of the housing 2 without being disassembled.

US 2009/0301801 A1 discloses a cable assembly according to the features of the preambles of claims 1 and 2.

US 2007/0093112 A1 discloses a electrical rail coupler assembly for railway trains connecting electrical power and controls between train carriages to maintain in use electrical contact between adjacent railway carriages. The assembly includes a pair of complementary coupler sub-assemblies securable together in use to maintain electrical contact there between. Each coupler sub-assembly includes a base to be fixed to a respective one of the carriages. A body is attached to the base and at least one electrical plug portion engages an electrical receptacle portion of the other sub-assembly. Securing means extends between the bodies to releasably secure the bodies together with the plug and receptacle portions in electrical contact.

US 5 751 135 A discloses a charging connector device for an electric vehicle, which has an illumination means mounted to a connector itself. The charging connector device comprises a power supplying connector and a power receiving connector, said power supplying connector comprising an indicator lamp set in an illumination chamber, said indicator lamp including two LEDs which emit two different colors during standby when said power supplying connector is connected to a charger and during charging, respectively.

### Summary of the Invention

In view of the above, the object of the present invention is to provide a power supply control device having improved maintenance.

In accordance with an aspect of the present invention, there is provided a cable assembly according to claims 1 or 2.

While the invention is defined in the independent claims, further aspects of the invention are set forth in the dependent claims, the drawings and the following description.

Further, a covering unit is coupled to the housing to cover at least a coupling portion between the holder and the joint part to inhibit the holder from being detached from the housing at the respective joint parts in the state where the covering unit is coupled to the housing.

Alternatively, a casing is coupled to the housing to cover the housing. The casing may have a covering part for covering at least the coupling portion between the holder and the joint part to inhibit the holder from being detached from the housing at the respective joint parts in the state where the casing is coupled to the housing.

Further, the vehicle side cable may be configured to have a signal line electrically connected to a control circuit of the vehicle for controlling the power supply control circuit, and the power supply control circuit may be operated in response to electric signals inputted thereto via the signal line.

In accordance with the present invention, the cable with the holder allows the wires to be connected to and disconnected from the power supply control circuit collectively by attaching and detaching the holder to and from the joint part. Accordingly, there is no need to open the housing when the cable is replaced, which makes it easier to replace the cable and improves its maintenance as compared with the conventional case where each of the wires is connected to and disconnected from the power supply control circuit by using the screw terminal or the like accommodated in the housing.

### Brief Description of the Drawings

The objects and features of the present invention will become apparent from the following description of embodiments, given in conjunction with the accompanying drawings, in which:
Fig. 1 is a plan view of a power supply control device in accordance with a first embodiment of the present invention;
Fig. 2 is a perspective view of a body block of the first embodiment with a cover removed;
Fig. 3 is a cross-sectional view of the main parts of the body block of the first embodiment;
Fig. 4 is a perspective view showing a holder of the first embodiment;
Fig. 5 is a perspective view showing the main parts of the first embodiment of the present invention;
Figs. 6A and 6B are perspective views showing main parts of a second embodiment of the present invention, wherein Fig. 6A shows a disassembled state, and Fig. 6B shows an assembled state;
Figs. 7A and 7B are perspective views showing main parts of a modification of the above embodiment, wherein Fig. 7A shows a disassembled state, and Fig. 7B shows an assembled state;
Fig. 8 is a block diagram showing a schematic structure of the power supply control device; and
Fig. 9 is a plan view showing the main parts of the conventional power supply control device.

### Detailed Description of the Embodiments

Hereinafter, embodiments of the present invention will be described with reference to the drawings.

### (First Embodiment)

Since a configuration of a power supply control device in accordance with a first embodiment of the present invention is basically common to the conventional example shown in Fig. 8, the detailed description of the common parts will be omitted.

The present embodiment has a feature in the connection structure between the body block 1 and each of cables PC and CC.

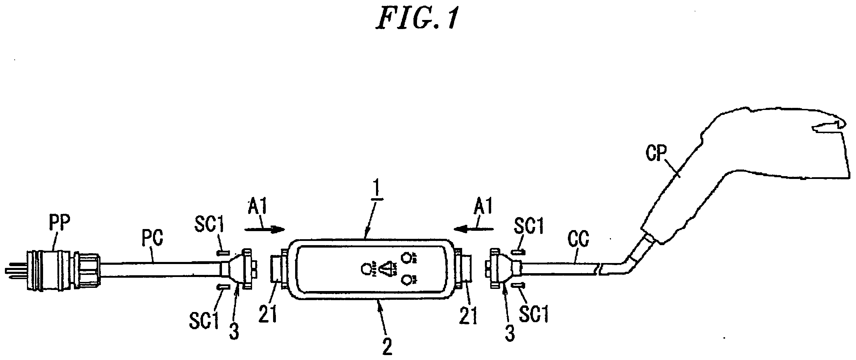

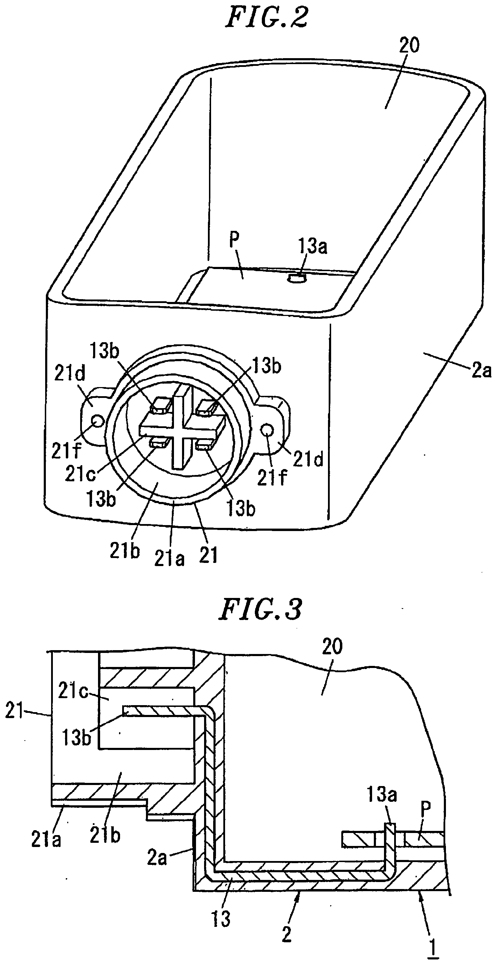

In detail, as shown in Fig. 1, the body block 1 is provided with a housing 2 accommodating a relay 10, a power supply circuit 11, and a drive circuit 12, which constitute a power supply control circuit. The housing 2, as shown in Fig. 2, has a body 2a with a rectangular parallelepiped shape, of which one side (e.g., a top side) extending longitudinally is opened to provide an accommodation space 20 exposed outwardly. The relay 10, the power supply circuit 11, and the drive circuit 12 are accommodated in the accommodation space 20.

Hereinafter, up-down and left-right directions are defined based on the directions shown in Fig. 2, and a longitudinal direction of the body 2a (i.e., left-right direction in Fig. 1 and lower left-upper right direction in Fig. 2) is referred to as "a front-rear direction". Note that these directions are defined for convenience of explanation, and do not necessarily congruous with the directions in the actual use state of the power supply control device.

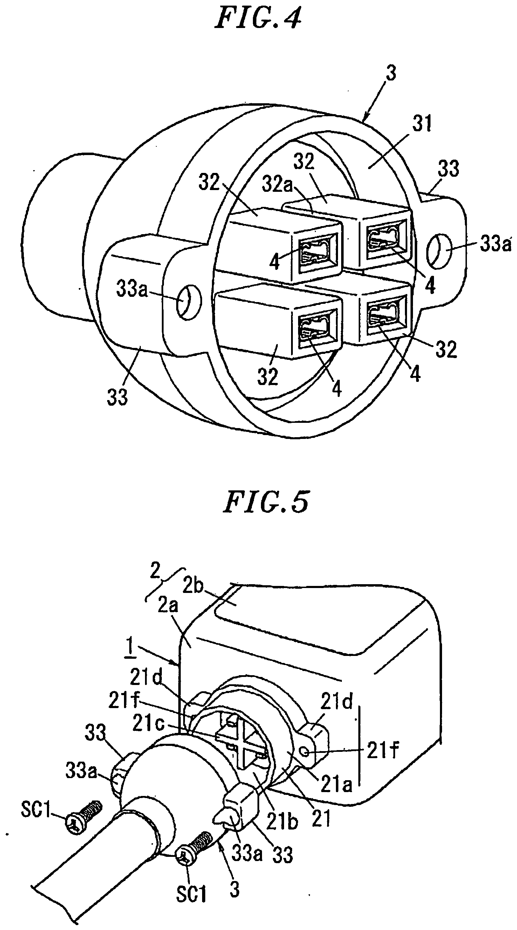

The housing 2 includes a cover 2b (see Fig. 5) coupled to the top side of the body 2a to seal the accommodation space 20. The body 2a and the cover 2b are molded of synthetic resin, respectively. Screwing, for example, may be employed as a manner of coupling the cover 2b to the body 2a. Further, an annular packing (not shown), made of a flexible material such as a synthetic rubber, is interposed between the body 2a and the cover 2b for the purpose of avoiding a gap from generating between the body 2a and the cover 2b to ensure waterproof performance of the housing 2.

The relay 10, the power supply circuit 11, and the drive circuit 12 are mounted on one surface (i.e., mounting surface) of a printed wiring board P. The printed wiring board P is accommodated in the accommodation space 20 with the other surface thereof (i.e., non-mounting surface) directed to the bottom (i.e., lower side) of the accommodation space 20.

Each of terminals 13 (see Fig. 8), to be connected to the respective wires PC1 to PC3 and CC1 to CC4 of the cables PC and CC in a one-to-one relationship, is formed by punching and bending a metal plate and is held in the body 2a by insert molding. Further, for example, each of the terminals 13has a mounted part 13a and is electrically connected to the relay 10, the power supply circuit 11 or the drive circuit 12 by the mounted part 13a protruding from the bottom of the accommodation space 20 to be mounted through the printed wiring board P by pin-insertion.

Furthermore, one ends of the respective cables PC and CC, at which no plugs PP and CP are provided, are provided with holders 3 to be coupled to the housing 2 as shown by arrows A1 in Fig. 1, the holder being made of insulating material. As shown in Fig. 4, each of the holders 3 holds a plurality of contacts 4 corresponding to the respective wires PC1 to PC3 or CC1 to CC4 in a one-to-one relationship, which are made of conductive material. Specifically, one holder 3 provided to the power side cable PC (hereinafter, referred to as "a power side holder") holds three contacts 4, and the other holder 3 provided to the vehicle side cable CC (hereinafter, referred to as "a vehicle side holder") holds four contacts 4. The holders 3 are, for example, made of synthetic resin. Each of the contacts 4 is, for example, formed by punching and bending a metal plate.

The vehicle side holder 3 has a wire inlet (not shown) into which the respective wires are introduced, and a connecting recess 31 formed into a cylindrical shape on the opposite side of the wire inlet. Further, four contact holding parts 32 with a square-tube shape are positioned in a rectangular array, and each of the contact holding parts 32 is protruded from a bottom of the connecting recess 31 so as to align its axis direction with a depth direction of the connecting recess 31. Each of the contacts 4 is held within the corresponding contact holding part 32 by, for example, engagement, thereby ensuring insulation between the contacts 4. Further, each of the contact holding parts 32 has side surfaces parallel to those of the adjacent contact holding parts 32. Thus, a cross passage 32a with a cross-shape is defined between the contact holding parts 32.

The each contact 4 is bent into a substantially square-tube shape as a whole to provide a similar shape to, so-called, a tab terminal of a receptacle, and one end of the contact 4 is exposed through the opening of the contact holding part 32.

The power side holder 3 is different from the vehicle side holder only in that the number of contacts 4 thereof is smaller by one than that of the vehicle side holder, in accordance with the number of wires PC1 to PC3. That is, the power side holder 3 is identical to the vehicle side holder except that one of the contact holding parts 32 does not hold the contact, so detailed illustration and description thereof will be omitted.

As for the housing 2, a first joint part 21 to which the vehicle side holder 3 is detachably coupled is provided on one end surface of the body 2a in the longitudinal direction, and a second joint part 21 to which the power side holder 3 is detachably coupled is provided on the other end surface of the body 2a in the longitudinal direction.

Each of the joint parts 21 has a cylindrical fitting tube 21a protruding from the end surface with its axial direction aligned with the longitudinal direction of the body 2a. Each of the fitting tubes 21a, which has an outer diameter slightly smaller than an internal diameter of the connecting recess 31 of the holder 3, is fitted into the connecting recess 31. The fitting tube 21a defines therein an insertion recessed portion 21b into which the contact holding parts 32 of the holder 3 are to be inserted. Herein, each of the terminals 13 has a contacting portion 13b protruding from the bottom surface of the insertion recessed portion 21b of the joint part 21 and surrounded by the fitting tube 21a. Further, protruded from the bottom surface of the insertion recessed portion 21b is a cross protrusion 21c with a cross-shape that separates the adjacent contacting portions 13b from each other and is adapted to be inserted into the cross passage 32a, thereby ensuring insulation between the contacting portions 13b.

When the holder 3 is coupled to the joint part 21, the fitting tube 21a is inserted into the connecting recess 31 such that each of the contacting portions 13b is aligned to the corresponding contact 4. Since the cross protrusion 21c is additionally inserted into the cross passage 32a, the holder 3 is avoided from rotating relative to the body 2a. Further, the contact 4 and the contacting portion 13b constitute a well-known tab terminal. That is, when the contacting portion 13b is inserted into the contact 4, the contact 4 elastically deforms, and the contacting pressure between the contact 4 and the contacting portion 13b is obtained by the elastic force of the contact 4.

Each of the holders 3 has clamping parts 33, which are provided at opposite portions thereof in the diametrical direction of the connecting recess 31, the clamping parts 33 protruding radially outwardly from the holder 3. Each of the clamping parts 33 has a through hole 33a through which a clamping screw SC1 is inserted. As for the joint part 21, coupled parts 21d are provided on opposite (right and left) sides of the fitting tube 21a respectively, and each of the coupled parts 21d has a screw hole 21f into which the screw SC1 is to be screwed. Thus, in the state where the fitting tube 21a is inserted into the connecting recess 31, the screw SC1 passing through the through hole 33a of the clamping part 33 is screwed into the screw hole 21f of the coupled part 21d, so that each of the holders 3 is coupled to the corresponding joint part 21.

In the state where each of the holders 3 is coupled to the corresponding joint part 21, the fitting tube 21a is closed by the holder 3 to define a closed space between the holder 3 and the housing 2. The contacts 4 and the contacting portions 13b are accommodated in the closed space. Further, in the cables PC and CC of which the holders 3 are coupled to the joint parts 21 respectively, the contacts 4 come into contact with the respective contacting portions 13b of the terminals 13 in a one-to-one relationship. Thus, each of the wires PC1 to PC3 and CC1 to CC4 is electrically connected to the relay 10, the power supply circuit 11 or the drive circuit 12 appropriately, via the corresponding contact 4 and terminal 13. An annular packing (not shown) made of flexible material such as a synthetic rubber is interposed between the surfaces of the holder 3 and the joint part 21, thereby increasing waterproof performance thereof.

According to such configuration, the wires PC1 to PC3 or CC1 to CC4 can be connected to and disconnected from the power supply control circuit collectively by attaching and detaching the holder to and from the joint part. Accordingly, this makes it easier to replace the cables PC and CC, which improves the maintenance thereof compared with the conventional case where the wires PC1 to PC3 and CC1 to CC4 are connected to and disconnected from the power supply control circuit individually by using such as the screw terminal in the housing 2. Further, since the cables PC and CC can be replaced without opening the housing 2, the waterproof performance remains intact even though the cables PC and CC are replaced.

The above configuration may be applied to only one of the power side cable PC and the vehicle side cable CC, and the other cable, for example, may be connected by using a screw terminal as in the conventional example. Even in this case, the cable PC or CC having the above configuration (i.e., the cable with the holder 3) can be replaced easily, thereby obtaining the effect described above.

### (Second Embodiment)

A configuration of the present embodiment is basically common to the first embodiment, so the detailed illustration and description of the common parts will be omitted.

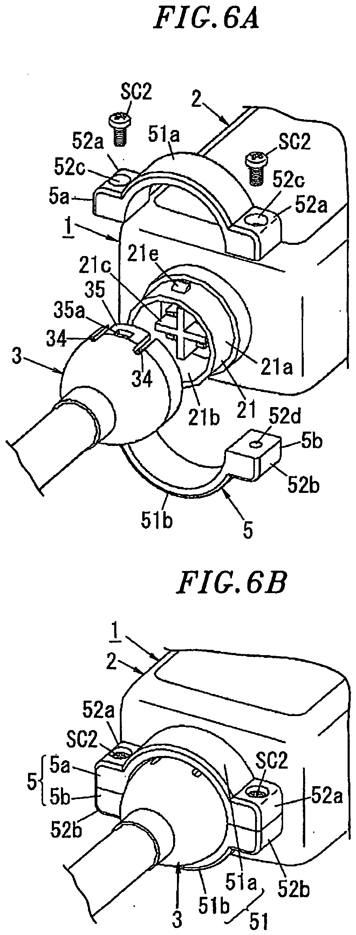

The present embodiment is different from the first embodiment in a coupling manner between the holder 3 and the joint part 21. Specifically, in the present embodiment, instead of the screw coupling, a hook engagement using an engaged piece 35 and an engaging projection 21e is employed as shown in Fig. 6A.

In detail, the engaged piece 35 is formed in the holder 3 by separating a top end portion a circumferential wall of the holder 3 surrounding the connecting recess 31 from the remaining portion of the circumferential wall of the holder 3 with two slits 34. The engaged piece 35 is elastically deformable in such a way that its free end, which is closer to the housing 2, is deformed upwardly relative to the other base end, that is, the internal diameter of the connecting recess 31 is expanded outwardly. Besides, in the engaged piece 35, there is provided an engaged hole 35a formed therethrough in the radial direction of the connecting recess 31.

The joint part 21 of the housing 2 has the engaging projection 21e protruding from a top portion of an outer peripheral surface of the fitting tube 21a. The engaging projection 21e has an inclined upper surface such that the projecting amount of the engaging projection 21e becomes larger as it goes in the direction in which the holder 3 is to be coupled.

When the holder 3 is attached to the joint part 21, the engaged piece 35 is elastically deformed along the inclined upper surface of the engaging projection 21e gradually as the fitting tube 21a is inserted into the connecting recess 31 of the holder 3. When the leading end of the engaged hole 35a passes over the engaging projection 21e, the engaged piece 35 recovers elastically so that the engaging projection 21e engages into the engaged hole 35a. Accordingly, the holder 3 is locked to the joint part 21.

In the state that the holder 3 of the cable PC or CC is coupled to the joint part 21, the contacts 4 come into contact with the respective contacting portions 13b of the terminals 13 in a one-to-one relationship, so that each of the wires PC1 to PC3 or CC1 to CC4 is electrically connected to the relay 10, the power supply circuit 11 or the drive circuit 12 appropriately, via the corresponding contact 4 and terminal 13.

When detaching the holder 3 from the joint part 21, the holder 3 is moved in a direction away from the housing 2 while the engaged piece 35 is elastically deformed to make the engaging projection 21e get out of the engaged hole 35a.

Moreover, in the present embodiment, a covering unit 5 with a substantially annular shape as a whole is attached to the housing 2 to surround the holder 3 and the joint part 21 with respect to each of the power side and the vehicle side. Each of the covering units 5 includes two half-segmented bodies 5a and 5b. The half-segmented bodies 5a and 5b have semi-annular parts 51a and 51b, respectively.

Further, the half-segmented body 5a or 5b has two joint parts 52a or 52b protruding outwardly from both circumferential ends of the semi-annular part 51a or 51b in the radial direction. A through hole 52c is formed in the joint part 52a, and in the joint part 52b, there is formed a screw hole 52d into which a screw SC2 passing through the through hole 52c is screwed. Thus, the half-segmented bodies 5a and 5b are coupled with each other to provide the covering unit 5 by coupling the joint parts 52a and 52b to each other by using the screw SC2 in a one-to-one relationship. In this state, the semi-annular parts 51a and 51b of the half-segmented bodies 5a and 5b form an annular part 51 as a whole, and the annular part 51 has an inner diameter substantially the same as the outer diameter of the holder 3. Accordingly, the covering unit 5 is fixed to the housing 2 by screwing the screws SC2 through the through holes 52c into the screw holes 52d respectively in the state that the half-segmented bodies 5a and 5b are coupled to each other while the semi-annular parts 51a and 51b surround the holder 3 attached to the joint part 21.

In the above state where the covering unit 5 is fixed to the housing 2, the annular part 51 of the covering unit 5 covers the engaging projection 21e and the inside of the engaged hole 35a of the engaged piece 35, which serve as the coupling portion. Thus, the engaged piece 35 is avoided from deforming to make the engaging projection 21e get out of the engaged hole 35a, thereby inhibiting the holder 3 from being detached from the housing 2.

According to the above configuration, since the covering unit 5 needs to be removed first when the cable PC or CC is detached from the body block 1, it is possible to avoid general users with no expertise skills from replacing the cable PC or CC with an inappropriate one.

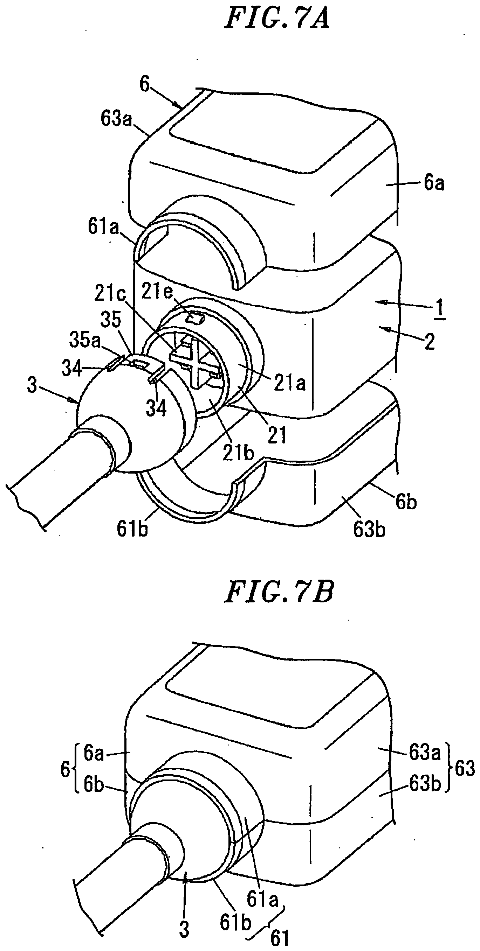

Instead of providing the above covering unit 5 individually with respect to each of the joint parts 21 in the power side and the vehicle side, there may be provided, as shown in Figs. 7A and 7B, a casing 6 covering the housing 2. The casing 6 includes two covering parts 61 surrounding the respective joint parts 21. In the case of employing such a configuration, the number of components is reduced. In the example shown in Figs. 7A and 7B, the casing 6 is configured to cover the respective holders 3 and the whole housing 2.

The casing 6 includes: a main body 63 with a rectangular parallelepiped shape as a whole; and the covering parts 61 protruded from the main body 63 and each covering at least a coupling portion between the holder 3 and the joint part 21 (the fitting tube 21a). The casing 6 is constituted by two half-segmented bodies 6a and 6b coupled in the up-down direction to surround the housing 2 therein. The half-segmented body 6a or 6b has a body part 63a or 63b (the body parts 63a and 63b constituting the main body 63 when the half-segmented bodies 6a and 6b are coupled with each other), and two semi-annular parts 61a or 61b (only one is shown in the drawings) (the corresponding semi-annular parts 61a and 61b constituting the covering part 61 of the casing 6 when the half-segmented bodies 6a and 6b are coupled with each other). Screwing, for example, can be employed as a manner of coupling the above half-segmented bodies 6a and 6b with each other. In the state where the case 6 is fixed to the housing 2, the covering part 61 of the casing 6 covers the engaging projection 21e and the inside of the engaged hole 35a of the engaged piece 35, which serve as the coupling portion, so that the engaged piece 35 is avoided from deforming elastically to make the engaging projection 21e get out of the engaged hole 35a. Thus, the holder 3 is inhibited from being detached from the housing 2. For that reason, when detaching the cable PC or CC from the body block 1, the casing 6 needs to be removed first similar to the case of the covering unit 5. Accordingly, it is possible to suppress general users with no expertise skills from replacing the cable PC or CC with an inappropriate one, because the casing 6 should be removed first when the cable PC or CC is detached from the body block 1.

Further, the half-segmented body 6a or 6b of the casing 6 has two semi-annular parts 61a or 61b joined to each other through the body part 63a or 63b, which reduces the number of components as compared with the case where the total four semi-annular parts 51a and 51b divided individually as shown in Figs. 6A and 6B. Furthermore, the casing 6 covering the housing 2 can improve the waterproof performance and the appearance thereof.

As described above, in order to avoid general users with no expertise skills from replacing the cable PC or CC with an inappropriate one, as the screw SC1 used in coupling the holder 3 to the housing 2 in the first embodiment and as the screw SC2 used in assembling the covering unit 5 or the casing 6 in the second embodiment, a special screw (such as a so-called tamper-proof screw) unable to be removed by a commonly-used tool is preferably employed. The above tamper-proof screw includes, for example, a tri-wing small pan-head screw.

Alternatively, instead of coupling the covering unit 5 or the casing 6 to the housing 2 detachably as described above, the half-segmented bodies 5a, 5b or 6a, 6b may be coupled to each other so as not to be detached from the housing 2 without being destroyed by using ultrasonic bonding and an adhesive. From the viewpoint of maintenance, however, the covering unit 5 or the casing 6 are preferable to be detachably coupled to the housing 2.

While the invention has been shown and described with respect to the embodiments, it will be understood by those skilled in the art that various changes and modification may be made without departing from the scope of the invention as defined in the following claims.

## Claims

1. A cable assembly, comprising:
a body block (1) including a power supply control circuit (ZCT, 10, 11, 12) interposed between a charge circuit of a vehicle and a power source and turning on/off power supply from the power source to the charge circuit, and a housing (2) accommodating the power supply control circuit (ZCT, 10, 11, 12);
a power side cable (PC) having a plurality of wires (PC1, PC2, PC3) through which the power source and the power supply control circuit (ZCT, 10, 11, 12) are electrically connected to each other; and
a vehicle side cable (CC) having a plurality of wires (CC1, CC2, CC3, CC4) through which the charge circuit and the power supply control circuit (ZCT, 10, 11, 12) are electrically connected to each other,
wherein at least one of the power side cable (PC) and the vehicle side cable (CC) includes: a plurality of contacts (4) made of conductive material and electrically connected to the respective wires thereof (PC1~PC3 or CC1~CC4); and a holder (3) holding the contacts (4),
wherein the body block (1) has a plurality of terminals (13) made of conductive material, the terminals (13) being electrically connected to the power supply control circuit (ZCT, 10, 11, 12) and held by the housing (2) such that a portion of each of the terminals (13) is exposed out of the housing (2),
wherein the housing (2) is provided with at least one joint part (21) to which the holder (3) is detachably coupled,
wherein the contacts (4) are brought into contact with the respective terminals (13) in the state where the holder (3) is coupled to the joint part (21), so that the respective wires (PC1~PC3 or CC1~CC4) are electrically connected to the power supply control circuit (ZCT, 10, 11, 12), **characterized in that**
a covering unit (5) with a substantially annular shape as a whole is coupled to the housing (2) and includes two half-segmented bodies (5a, 5b),
wherein each of the half-segmented bodies (5a or 5b) includes a semi-annular part (51 a or 51 b) and two joints (52a or 52b), the two joints protruding outwardly from both circumferential ends of the semi-annular part (51a or 51b) in a radial direction,
and
wherein the two half-segmented bodies (5a, 5b) are coupled to each other while the semi-annular parts (51a, 51b) surround the holder (3) attached to the joint part (21) so that the covering unit (5) covers at least a coupling portion between the holder (3) and the joint part (21) to inhibit the holder (3) from being detached from the housing (2) in the state where the covering unit (5) is coupled to the housing (2).

2. A cable assembly, comprising:
a body block (1) including a power supply control circuit (ZCT, 10, 11, 12) interposed between a charge circuit of a vehicle and a power source and turning on/off power supply from the power source to the charge circuit, and a housing (2) accommodating the power supply control circuit (ZCT, 10, 11, 12);
a power side cable (PC) having a plurality of wires (PC1, PC2, PC3) through which the power source and the power supply control circuit (ZCT, 10, 11, 12) are electrically connected to each other; and
a vehicle side cable (CC) having a plurality of wires (CC1, CC2, CC3, CC4) through which the charge circuit and the power supply control circuit (ZCT, 10, 11, 12) are electrically connected to each other,
wherein at least one of the power side cable (PC) and the vehicle side cable (CC) includes: a plurality of contacts (4) made of conductive material and electrically connected to the respective wires thereof (PC1~PC3 or CC1~CC4); and a holder (3) holding the contacts (4),
wherein the body block (1) has a plurality of terminals (13) made of conductive material, the terminals (13) being electrically connected to the power supply control circuit (ZCT, 10, 11, 12) and held by the housing (2) such that a portion of each of the terminals (13) is exposed out of the housing (2),
wherein the housing (2) is provided with at least one joint part (21) to which the holder (3) is detachably coupled,
wherein the contacts (4) are brought into contact with the respective terminals (13) in the state where the holder (3) is coupled to the joint part (21), so that the respective wires (PC1~PC3 or CC1~CC4) are electrically connected to the power supply control circuit (ZCT, 10, 11, 12), **characterized in that**
a casing (6) is coupled to the housing (2) to cover the housing (2) and includes two half-segmented bodies (6a and 6b) coupled to surround the housing (2) therein,
wherein each of the half-segmented bodies (6a or 6b) includes a body part (63a or 63b) and a semi-annular part (61 a or 61 b), and
wherein the body parts (63a and 63b) have a rectangular parallelepiped shape as a whole when the half-segmented bodies (61 and 6b) are coupled with each other and the semi-annular parts (61 a and 61 b) are protruded from the respective body parts (63a and 63b) to cover at least a coupling portion between the holder (3) and the joint part (21) to inhibit the holder (3) from being detached from the housing (2) in the state where the casing (6) is coupled to the housing (2).

3. The cable assembly as set forth in Claim 1 or 2, wherein the vehicle side cable (CC) has a signal line (CC4) serving as a wire electrically connected to a control circuit of the vehicle for controlling the power supply control circuit (ZCT, 10, 11, 12), and
wherein the power supply control circuit (ZCT, 10, 11, 12) is operated in response to electric signals inputted thereto via the signal line (CC4).

## Patentansprüche

1. Kabelaufbau, umfassend:
ein Körperblock (1), der einen Stromversorgungssteuerstromkreis (ZCT, 10, 11, 12) enthält, der zwischen einem Ladestromkreis von einem Auto und einer Stromquelle liegt und der eine Stromversorgung von der Stromquelle zu dem Ladestromkreis an/ausschaltet, und ein Gehäuse (2), das den Stromversorgungssteuerstromkreis (ZCT, 10, 11, 12) aufnimmt;
ein stromseitiges Kabel (PC), das eine Vielzahl von Drähte (PC1, PC2, PC3) aufweist, durch das die Stromquelle und der Stromversorgungssteuerstromkreis (ZCT, 10, 11, 12) elektrisch miteinander verbunden werden; und
ein autoseitiges Kabel (CC), das eine Vielzahl von Drähte (CC1, CC2, CC3, CC4) aufweist, durch das der Ladestromkreis und der Stromversorgungssteuerstromkreis (ZCT, 10, 11, 12) elektrisch miteinander verbunden werden,
wobei zumindest eines von dem stromseitigen Kabel (PC) und dem autoseitigen Kabel (CC) enthält: eine Vielzahl von Kontakten (4), die aus leitendem Material hergestellt sind und mit den entsprechenden Drähten dessen (PC1-PC3 oder CC1-CC4) elektrisch verbunden werden; und ein Halter (3), der die Kontakte (4) hält,
wobei der Körperblock (1) eine Vielzahl von Anschlüssen (13) aufweist, die aus leitendem Material hergestellt sind, wobei die Anschlüsse (13) elektrisch mit dem Stromversorgungssteuerstromkreis (ZCT, 10, 11, 12) verbunden sind, und durch das Gehäuse (2) gehalten werden, so dass ein Teil von jedem der Anschlüsse (13) aus dem Gehäuse (2) freigelegt ist,
wobei das Gehäuse (2) mit zumindest einem Verbindungsteil (21) vorgesehen ist, mit dem der Halter (3) lösbar gekoppelt ist,
wobei die Kontakte (4) mit den entsprechenden Anschlüssen (13) in dem Zustand in Kontakt gebracht sind, wo der Halter (3) mit dem Verbindungsteil (21) gekoppelt ist, so dass die entsprechenden Drähte (PC1-PC3 oder CC1-CC4) mit dem Stromversorgungssteuerstromkreis (ZCT, 10, 11, 12) elektrisch verbunden sind, **dadurch gekennzeichnet, dass**
eine Abdeckungseinheit (5), mit einer im Wesentlichen als Ganzes ringförmigen Form, mit dem Gehäuse (2) gekoppelt ist und zwei in Hälften segmentierte Körper (5a, 5b) enthält,
wobei jeder der in Hälften segmentierten Körper (5a oder 5b), ein halbringförmigen Teil (51a oder 51b) und zwei Verbindungsstücke (52a oder 52b) enthält, wobei die zwei Verbindungsstücke von beiden umlaufenden Enden des halbringförmigen Teils (51a oder 51b) in einer radialen Richtung nach außen hervorstehen, und
wobei die zwei in Hälften segmentierten Körper (5a, 5b) miteinander gekoppelt sind, während die halbringförmigen Teile (51a, 51b) den Halter (3) umgeben, der an dem Verbindungsteil (21) befestigt ist, so dass die Abdeckungseinheit (5) zumindest einen Kopplungsbereich zwischen dem Halter (3) und dem Verbindungsteil (21) abdeckt, um den Halter (3) daran zu hindern, in dem Zustand von dem Gehäuse (2) abgelöst zu werden, wo die Abdeckungseinheit (5) mit dem Gehäuse (2) gekoppelt ist.

2. Kabelaufbau, umfassend:
ein Körperblock (1), der einen Stromversorgungssteuerstromkreis (ZCT, 10, 11, 12) enthält, der zwischen einem Ladestromkreis von einem Auto und einer Stromquelle liegt und der eine Stromversorgung von der Stromquelle zu dem Ladestromkreis an/ausschaltet, und ein Gehäuse (2), das den Stromversorgungssteuerstromkreis (ZCT, 10, 11, 12) aufnimmt;
ein stromseitiges Kabel (PC), das eine Vielzahl von Drähte (PC1, PC2, PC3) aufweist, durch das die Stromquelle und der Stromversorgungssteuerstromkreis (ZCT, 10, 11, 12) elektrisch miteinander verbunden werden; und
ein autoseitiges Kabel (CC), das eine Vielzahl von Drähte (CC1, CC2, CC3, CC4) aufweist, durch das der Ladestromkreis und der Stromversorgungssteuerstromkreis (ZCT, 10, 11, 12) elektrisch miteinander verbunden werden,
wobei zumindest eines von dem stromseitigen Kabel (PC) und dem autoseitigen Kabel (CC) enthält: eine Vielzahl von Kontakten (4), die aus leitendem Material hergestellt sind und mit den entsprechenden Drähten dessen (PC1-PC3 oder CC1-CC4) elektrisch verbunden werden; und ein Halter (3), der die Kontakte (4) hält,
wobei der Körperblock (1) eine Vielzahl von Anschlüssen (13) aufweist, die aus leitendem Material hergestellt sind, wobei die Anschlüsse (13) elektrisch mit dem Stromversorgungssteuerstromkreis (ZCT, 10, 11, 12) verbunden sind, und durch das Gehäuse (2) gehalten werden, so dass ein Teil von jedem der Anschlüsse (13) aus dem Gehäuse (2) freigelegt ist,
wobei das Gehäuse (2) mit zumindest einem Verbindungsteil (21) vorgesehen ist, mit dem der Halter (3) lösbar gekoppelt ist,
wobei die Kontakte (4) mit den entsprechenden Anschlüssen (13) in Kontakt gebracht werden, in dem Zustand, wo der Halter (3) mit dem Verbindungsteil (21) gekoppelt wird, so dass die entsprechenden Drähte (PC1-PC3 oder CC1-CC4) mit dem Stromversorgungssteuerstromkreis (ZCT, 10, 11, 12) elektrisch verbunden sind, **dadurch gekennzeichnet, dass**
eine Hülle (6) mit dem Gehäuse (2) gekoppelt ist, um das Gehäuse (2) abzudecken und zwei in Hälften segmentierte Körperteile (6a und 6b) enthält, die gekoppelt sind, um das Gehäuse (2) darin zu umgeben,
wobei jeder der in Hälften segmentierten Köperteile (6a und 6b) ein Körperteil (63a oder 63b) und ein halbringförmiger Teil (61a oder 61b) enthält, und
wobei die Körperteile (63a und 63b) als Ganzes eine rechtwinklige, rechteckige Form aufweisen, wenn die in Hälften segmentierten Teile (61 und 6b) miteinander gekoppelt sind und die halbringförmigen Teile (61a und 61b) von den entsprechenden Körperteilen (63a und 63b) hervorstehen, um zumindest einen Kopplungsteil zwischen dem Halter (3) und dem Verbindungsteil (21) abzudecken, um den Halter (3) daran zu hindern, in dem Zustand von dem Gehäuse (2) abgelöst zu werden, wo die Hülle (6) mit dem Gehäuse (2) gekoppelt ist.

3. Kabelaufbau nach einem der Ansprüche 1 oder 2, bei dem das autoseitige Kabel (CC) eine Signallinie (CC4) aufweist, die als ein Draht dient, der elektrisch mit einem Steuerstromkreis von dem Auto verbunden ist, zum Steuern des Stromversorgungssteuerstromkreis (ZCT, 10, 11, 12), und
bei dem der Stromversorgungssteuerstromkreis (ZCT, 10, 11, 12) in Reaktion auf elektrische Signale betrieben wird, die darin über die Signallinie (CC4) eingegeben werden.

## Revendications

1. Ensemble câble, comprenant :
un bloc de corps (1) incluant un circuit de contrôle d'alimentation (ZCT, 10, 11, 12) interposé entre un circuit de charge d'un véhicule et une source d'alimentation, et qui active/désactive l'alimentation du circuit de charge par la source d'alimentation, et un logement (2) qui contient le circuit de contrôle d'alimentation (ZCT, 10, 11, 12) ;
un câble côté alimentation (PC) possédant une pluralité de fils (PC1, PC2, PC3) par lesquels la source d'alimentation et le circuit de contrôle d'alimentation (ZCT, 10, 11, 12) sont reliés électriquement l'un à l'autre ; et
un câble côté véhicule (CC) possédant une pluralité de fils (CC1, CC2, CC3, CC4) par lesquels le circuit de charge et le circuit de contrôle d'alimentation (ZCT, 10, 11, 12) sont reliés électriquement l'un à l'autre,
dans lequel au moins l'un du câble côté alimentation (PC) et du câble côté véhicule (CC) comprend : une pluralité de contacts (4) composés d'un matériau conducteur et reliés électriquement aux fils respectifs de ceux-ci (PC1~PC3 ou CC1~CC4) ; et un support (3) qui maintient les contacts (4),
dans lequel le bloc de corps (1) possède une pluralité de bornes (13) composées d'un matériau conducteur, les bornes (13) étant reliées électriquement au circuit de contrôle d'alimentation (ZCT, 10, 11, 12) et étant maintenues par le logement (2) de sorte qu'une partie de chacune des bornes (13) soit exposée en-dehors du logement (2),
dans lequel le logement (2) est muni d'au moins une partie de jonction (21) à laquelle le support (3) est relié de manière amovible,
dans lequel les contacts (4) sont amenés en contact avec les bornes respectives (13) lorsque le support (3) est relié à la partie de jonction (21), de sorte que les fils respectifs (PC1~PC3 ou CC1~CC4) soient reliés électriquement au circuit de contrôle d'alimentation (ZCT, 10, 11, 12), **caractérisé en ce que**
une unité de recouvrement (5) avec une forme sensiblement annulaire dans son ensemble est reliée au logement (2) et comprend deux corps à demi-segments (5a, 5b),
dans lequel chacun des corps à demi-segments (5a ou 5b) comprend une partie semi-annulaire (51a ou 51b) et deux jonctions (52a ou 52b), les deux jonctions s'étendant en saillie à l'extérieur des deux extrémités circonférentielles de la partie semi-annulaire (51a ou 51b) dans une direction radiale, et
dans lequel les deux corps à demi-segments (5a, 5b) sont reliés l'un à l'autre, tandis que les parties semi-annulaires (51a, 51b) entourent le support (3) relié à la partie de jonction (21) de sorte que l'unité de recouvrement (5) recouvre au moins une partie de couplage entre le support (3) et la partie de jonction (21) de façon à empêcher le support (3) d'être détaché du logement (2) lorsque l'unité de recouvrement (5) est reliée au logement (2).

2. Ensemble câble, comprenant :
un bloc de corps (1) incluant un circuit de contrôle d'alimentation (ZCT, 10, 11, 12) interposé entre un circuit de charge d'un véhicule et une source d'alimentation, et qui active/désactive l'alimentation du circuit de charge par la source d'alimentation, et un logement (2) qui contient le circuit de contrôle d'alimentation (ZCT, 10, 11, 12) ;
un câble côté alimentation (PC) possédant une pluralité de fils (PC1, PC2, PC3) par lesquels la source d'alimentation et le circuit de contrôle d'alimentation (ZCT, 10, 11, 12) sont reliés électriquement l'un à l'autre ; et
un câble côté véhicule (CC) qui possède une pluralité de fils (CC1, CC2, CC3, CC4) par lesquels le circuit de charge et le circuit de contrôle d'alimentation (ZCT, 10, 11, 12) sont reliés électriquement l'un à l'autre,
dans lequel au moins l'un du câble côté alimentation (PC) et du câble côté véhicule (CC) comprend : une pluralité de contacts (4) composés d'un matériau conducteur et reliés électriquement aux fils respectifs de ceux-ci (PC1~PC3 ou CC1~CC4) ; et un support (3) qui maintient les contacts (4),
dans lequel le bloc de corps (1) possède une pluralité de bornes (13) composées d'un matériau conducteur, les bornes (13) étant reliées électriquement au circuit de contrôle d'alimentation (ZCT, 10, 11, 12) et étant maintenues par le logement (2) de sorte qu'une partie de chacune des bornes (13) soit exposée en-dehors du logement (2),
dans lequel le logement (2) est muni d'au moins une partie de jonction (21) à laquelle le support (3) est relié de manière amovible,
dans lequel les contacts (4) sont amenés en contact avec les bornes respectives (13) lorsque le support (3) est relié à la partie de jonction (21), de sorte que les fils respectifs (PC1~PC3 ou CC1~CC4) soient reliés électriquement au circuit de contrôle d'alimentation (ZCT, 10, 11, 12), **caractérisé en ce que**
un carter (6) est relié au logement (2) afin de recouvrir le logement (2), et comprend deux corps à demi-segments (6a et 6b) reliés afin d'entourer le logement (2),
dans lequel chacun des corps à demi-segments (6a ou 6b) comprend une partie de corps (63a ou 63b) et une partie semi-annulaire (61a ou 61b), et
dans lequel les parties de corps (63a et 63b) possèdent- une forme de parallélépipède rectangulaire dans leur ensemble quand les corps à demi-segments (6a et 6b) sont reliés l'un à l'autre, et les parties semi-annulaires (61a et 61b) s'étendent en saillie des parties de corps respectives (63a et 63b) afin de recouvrir au moins une partie de couplage entre le support (3) et la partie de jonction (21) de façon à empêcher le support (3) d'être détaché du logement (2) lorsque le carter (6) est relié au logement (2).

3. Ensemble câble selon la revendication 1 ou 2, dans lequel le câble côté véhicule (CC) possède une ligne de signaux (CC4) qui sert de fil électriquement relié à un circuit de contrôle du véhicule destiné à contrôler le circuit de contrôle d'alimentation (ZCT, 10, 11, 12), et
dans lequel le circuit de contrôle d'alimentation (ZCT, 10, 11, 12) est activé en réponse aux signaux électriques fournis à celui-ci par le biais de la ligne de signaux (CC4).
